Europäisches Patentamt

(19) European Patent Office

Office européen des brevets

(11) Numéro de publication: **0 188 929**
**B1**

(12) **FASCICULE DE BREVET EUROPÉEN**

(45) Date de publication du fascicule du brevet:
17.01.90

(51) Int. Cl.⁴: **C 25 B 11/00, C 25 B 11/12**

(21) Numéro de dépôt: 85402340.5

(22) Date de dépôt: 28.11.85

(54) Nouvelles électrodes activées à l'aide d'hétéropolyacides, leur préparation et leur application, notamment comme cathodes pour l'électrolyse de l'eau en milieu acide.

(30) Priorité: 28.11.84 FR 8418094

(43) Date de publication de la demande:
30.07.86 Bulletin 86/31

(45) Mention de la délivrance du brevet:
17.01.90 Bulletin 90/03

(84) Etats contractants désignés:
DE FR GB IT NL

(56) Documents cité:
US-A-3 272 728

CHEMICAL ABSTRACTS, vol. 99, no. 8, 22 août 1983, no. 60780h, Columbus, Ohio, US; S. Meguro et al.: "Modified electrodes with ion associate complexes of heteropoly acids", & DENKI KAGAKU OYOBI KOGYO BUTSURI KAGAKU 1983, 51(1), 87-8

CHEMICAL ABSTRACTS, vol. 101, no. 16, 15th octobre 1984, page 738, no. 142440w, Columbus, Ohio, US; & JP - A -59 60 818 (TEIJIN LTD.) 06-04-1984

(73) Titulaire: Etablissement Public dit: CENTRE NATIONAL DE LA RECHERCHE SCIENTIFIQUE (CNRS)
15, Quai Anatole France
F-75007 Paris (FR)

(72) Inventeur: Nadjo, Louis
Ensic - 1, rue Grandville
F-54042 Nancy Cedex (FR)
Inventeur: Keita, Bineta
12 rue des Glacis
F-54000 Nancy (FR)

(74) Mandataire: Nony, Michel
Cabinet Nony 29, rue Cambacérès
F-75008 Paris (FR)

## Description

La présente invention a pour objet de nouvelles électrodes activées l'aide d'hétéropolyacides, leur préparation et leur application, notamment comme cathodes dans des cellules d'électrolyse.

On sait que de nombreuses recherches sont actuellement effectuées dans le but de trouver des produits pouvant être substitués aux combustibles fossiles, et il est généralement admis que l'hydrogène sera dans l'avenir un produit de remplacement important.

Les méthodes industrielles de production d'hydrogène consistent, soit à réduire l'eau par le carbone ou les hydrocarbures, en fournissant de l'énergie, soit à décomposer l'eau par électrolyse.

Les techniques chimiques de réduction de l'eau présentent l'inconvénient d'utiliser comme produits de départ des combustibles fossiles, et fournissent de l'hydrogène moins pur que l'électrolyse de l'eau. En outre, ces techniques de réduction chimique de l'eau entraînent la formation de gaz carbonique dont on cherche actuellement à limiter les rejets.

L'électrolyse de l'eau est une technique potentiellement intéressante. Toutefois, pour électrolyser l'eau avec une vitesse appréciable, il est nécessaire d'appliquer une surtension relativement élevée qui implique une dépense d'énergie électrique supplémentaire.

Il est certes théoriquement possible de réduire au minimum ces surtensions par l'utilisation de cathodes à revêtement de platine, mais le platine est trop coûteux pour permettre d'obtenir l'hydrogène électrolytique à des prix de revient compétitifs même si on arrive à diminuer la charge de platine par unité de surface d'électrodes.

La présente invention a pour objet un nouveau procédé d'activation d'électrodes qui permet notamment d'utiliser comme cathodes des matériaux tels que le carbone vitreux ou le graphite, bien connus pour leur forte surtension de dégagement d'hydrogène, avec des performances égales ou même supérieures à celles du platine.

L'invention permet donc l'utilisation d'électrodes qui sont réalisées en un matériau peu coûteux, et qui présentent en outre l'avantage de n'être pas sensibles à la présence d'impuretés connues pour avoir un effet d'empoisonnement des catalyseurs de la réaction de dégagement d'hydrogène.

La présente invention a pour objet des électrodes constituées par un matériau conducteur dont la surface est activée par traitement à l'aide d'au moins un hétéropolyacide.

Deux tentatives de modification de la surface d'électrodes à base de carbone par des hétéropolyacides ont été signalées dans la littérature récente. Ces modifications étaient toutefois différentes de la présente invention, aussi bien du point de vue de la technique d'activation que de la nature des résultats recherchés et obtenus.

Le premier cas (demande de brevet japonais 82/168606 n° de publication 84 60818; Chemical Abstracts, Vol. 101, 15 Octobre 1984, page 738, abrégé n° 142 440 w) concerne le dépôt par précipitation sur le carbone d'un matériau ionique composite contenant un hétéropolyacide, un composé organique et un composé organométallique. Le matériau d'électrode obtenu peut être utilisé pour la réduction de l'oxygène et pour des synthèses sélectives par électrolyse.

Dans le second cas (Meguro et al., "Modified electrodes with ion associate complexes of heteropoly acids", Denki Kagaku Oyobi Kogyo Butsuri Kagaku, 1983, 51 (1), 87 - 88; Chemical Abstracts Vol. 99, 22 Août 1983, page 441, abrégé n° 60780 h) le carbone vitreux est enduit d'un sel d'hétéropolyacide. Les contre-ions choisis sont des ions ammonium ($NH_4^+$, polyvinylbenzyl trimethyl ammonium, etc...). Les vagues de surface correspondant à des systèmes redox ont été observées en voltammétrie cyclique.

Tous ces résultats diffèrent de ceux de la présente invention, notamment par:

— la technique de dépôt dans les deux cas;
— les concentrations utilisées;
— la nature du dépôt dans le premier cas;
— le type de résultat recherché (dans le premier cas) et observé (dans le deuxième cas) puisqu'avec l'électrode de la présente invention, les systèmes redox caractéristiques de l'hétéropolyanion ne sont plus observés à la fin du traitement de l'électrode.

Les hétéropolyacides sont des acides dérivés de deux ou plusieurs autres acides, tels que les anions de chaque acide conservent leur identité structurale au sein du radical complexe ou de la molécule formée. Le terme hétéropolyacide est attribué plus particulièrement aux acides complexes dans lesquels tous les anions sont formés d'oxydes.

On sait que les hétéropolyacides, notamment ceux dérivés du tungstène et du molybdène, constituent une série d'espèces chimiques qui ont fait l'objet de nombreuses études et dont l'analogie de propriétés a été mise en évidence dans plusieurs domaines.

Les hétéropolyacides, ou les hétéropolyanions correspondants, leur préparation et certaines de leurs propriétés ont été décrits notamment dans les ouvrages suivants:

Nouveau Traité de Chimie Minérale, sous la direction de Paul Pascal, tome XIV, en particulier pages 17 - 19 et 903 - 981; P. Souchay, "Polyanions et polycations", Gauthier-Villars Editeur, Paris, 1963; et P. Souchay, "Ions minéraux condensés", Masson et Cie Editeurs, Paris, 1969.

On sait que les hétéropolyacides proviennent de l'association de certains anhydrides métalliques avec des acides oxygénés, cette association étant complétée par la fixation éventuelle d'eau. On obtient ainsi toute une série de complexes appelés hétéropolyacides, qui sont particulièrement nombreux dans le cas des anhydrides molybdique et tungstique.

EP 0 188 929 B1

En outre, il est possible de substituer partiellement l'anhydride vanadique aux anhydrides molybdique et tungstique.

Parmi les acides qu'il est possible d'associer aux anhydrides mentionnés ci-dessus, on citera notamment les acides silicique, phosphoriques. orthoborique, germanique, arsénique, antimonique, etc...

On sait que l'on caractérise habituellement ces hétéropolyacides par le rapport M/X,

avec M = Mo ou W ou encore partiellement V,
et X = B, Si, Ge, P, As, Sb, etc...

Les hétéropolyacides, qui sont préparés, de façon générale, par l'action des anhydrides des métaux considérés sur des solutions des acides oxygénés choisis, en milieu acide, se transforment souvent les uns en les autres en fonction notamment du pH. En outre, on peut souvent isoler plusieurs hydrates.

On les représente généralement par une formule simplifiée faisant apparaître d'une part le nombre d'hydrogènes acides et d'autre part les anions, puisque, comme indiqué précédemment, les anions conservent leur identité dans les hétéropolyacides.

On peut également représenter ces acides ou les anions correspondants de façon encore plus simple avec une formule abrégée faisant apparaître les hydrogènes acides et les atomes constituant les anions, comme cela sera montré plus loin sur des exemples.

Les hétéropolyacides les plus courants sont ceux dans lesquels le rapport M/X est égal à 12. On appelle généralement ces polyacides: "hétéropolyacides de la série 12". Ces produits peuvent être facilement préparés, et plusieurs d'entre eux sont des produits commerciaux.

Les hétéropolyanions de la série 11 (pour lesquels le rapport M/X est égal à 11) se transforment en acides de la série 12 en milieu suffisamment acide, de sorte que l'utilisation de produits de la série 11 comme produits de départ revient à utiliser en fait, en milieu fortement acide, les produits de la série 12.

D'autres séries d'hétéropolyacides peuvent être utilisées pour le traitement d'activation d'électrodes selon l'invention.

Parmi les hétéropolyacides, on peut citer notamment les acides:

- silico-12-tungstique de formule abrégée
  $H_4(SiW_{12}O_{40})$;
- phospho-12-tungstique de formule abrégée
  $H_3(PW_{12}O_{40})$;
- 2-phospho-18-tungstique de formule abrégée
  $H_6(P_2W_{18}O_{62})$;
- phosphomolybdotungstique de formule abrégée
  $H_6(P_2W_{17}MoO_{62})$;
- phospho-12-molybdique de formule abrégée
  $H_3(PMo_{12}O_{40})$
- 2-phospho-18-molybdique de formule abrégée
  $H_6(P_2Mo_{18}O_{62})$;
- silico-12-molybdique de formule abrégée
  $H_4(SiMo_{12}O_{40})$;
- boro-12-tungstique;
- germano-12-tungstique.
- 2-arsénio-18-tungstique;
- phospho-12-molybdique;
- 2-phospho-5-molybdique;
- germano-12-molybdique.

Parmi les hétéropolyacides utilisables selon l'invention, on peut également citer les dérivés d'hétéropolyacides dans lesquels le vanadium remplace partiellement le molybdène ou le tungstène, par exemple les dérivés germanovanadomolybdiques de formule $H_4(GeMo_{10}V_2O_{39})$, ou les analogues germanovanadotungstique, phosphovanadomolybdique, phosphovanadotungstique, silicovanadomolybdique, silicovanadotungstique, etc. Ces dérivés doivent être considérés comme des dérivés de la série 12, car leur formule est du type $XM_xV_y...$, avec $x + y = 12$.

Bien entendu, l'expression "hétéropolyacides" désigne aussi bien ces acides eux-mêmes que les solutions aqueuses, en milieu acide, de leurs sels solubles (par exemple sel de sodium ou de lithium).

L'invention s'étend à l'utilisation des produits de réduction des hétéropolyacides, tels que par exemple les composés appelés dérivés céruléo-molybdiques et céruléo-tungstiques.

La présente invention a donc pour objet une nouvelle électrode constituée en matériau conducteur de l'électricité, activée par traitement avec un hétéropolyacide, caractérisée par le fait qu'elle peut être obtenue par un procédé consistant à mettre en contact une électrode en matériau conducteur avec une solution aqueuse diluée d'au moins un hétéropolyacide ayant une concentration inférieure à $10^{-3}$ M, en milieu acide, puis à appliquer à l'électrode une tension cathodique d'au moins -0,4 volt, par rapport à une électrode au calomel saturée, pendant un temps suffisant pour que le courant soit stabilisé, ce qui correspond au fait que les vagues de réduction de l'hétéropolyanion correspondant ne sont plus observables en voltamétrie cyclique.

3

Les électrodes de l'invention peuvent notamment être caractérisées par le fait:

- que les éléments constitutifs dudit hétéropolyacide sont présents sur la surface de l'électrode traitée;
- que dans le cas où l'électrode est un solide ayant une surface mesurable, on peut obtenir une densité de courant d'échange, $i_0$, exprimée en ampères/cm$^2$, pour la réaction de dégagement d'hydrogène par électrolyse de l'eau en milieu acide, telle que ($- \log i_0$) est inférieur à 3, et en particulier inférieur à 2,8;
- que dans le cas où ladite électrode est en mercure, ladite densité de courant est telle que ($- \log i_0$) est inférieur ou égal à 4,1;
- et que dans le cas où l'électrode est un solide dont la surface n'est pas mesurable, le gain en potentiel mesuré pour la réaction de dégagement d'hydrogène par électrolyse de l'eau en milieu acide, pour un courant observé égal à 1 milliampère, est au moins égal à 1 volt.

Ces résultats sont obtenus notamment grâce au traitement de l'électrode avec des solutions diluées d'hétéropolyacide.

Une autre caractéristique des électrodes de l'invention est que la présence, sur la surface de l'électrode traitée, des éléments constitutifs de l'hétéropolyacide, peut être mise en évidence par des techniques d'analyse appropriées telles que par exemple la technique de spectroscopie d'électrons pour l'analyse chimique, dite aussi méthode E.S.C.A. (Electron Spectroscopy for Chemical Analysis); voir par exemple KANE et LARRABEE, Characterization of Solid Surfaces, Plenum Press (1974).

L'invention a notamment pour objet des électrodes dont la surface est activée à l'aide de formes réduites d'hétéropolyacides.

Les matériaux d'électrodes qui peuvent être activés à l'aide d'hétéropolyacides sont tous les matériaux conducteurs d'électricité (conducteurs électroniques) utilisables comme électrodes, en particulier des métaux et également des matériaux connus à base de carbone conducteur tels que par exemple le carbone vitreux ou le graphite.

L'invention repose donc sur l'utilisation d'une solution diluée d'au moins un hétéropolyacide, ou d'une forme réduite d'un hétéropolyacide, dans le traitement d'activation d'une électrode, et en particulier l'utilisation d'au moins un hétéropolyacide mentionné précédemment.

Le procédé de traitement d'activation des électrodes à l'aide d'hétéropolyacides selon l'invention est caractérisé par le fait que l'on met en contact une électrode constituée par un matériau conducteur d'électricité avec une solution aqueuse diluée d'au moins un hétéropolyacide ayant une concentration inférieure à $10^{-3}$ M, en milieu acide, et que l'on applique à ladite électrode une tension cathodique d'au moins -0,4 volt, par rapport à une électrode au calomel saturée, pendant un temps suffisant pour que le courant soit stabilisé, ce qui correspond au fait que les vagues de réduction de l'hétéropolyanion correspondant ne sont plus observables en voltamétrie cyclique.

De préférence, on opère à pH inférieur à 3. On opère notamment à un pH allant de 0 à 3, et de préférence de 0 à 1.

On effectue le traitement en particulier dans une solution aqueuse d'un acide fort, tel que par exemple l'acide sulfurique, l'acide chlorhydrique, l'acide perchlorique, etc...

Bien entendu, le traitement est effectué avec un hétéropolyacide qui est stable au pH de traitement.

La solution de traitement d'électrodes est une solution diluée d'hétéropolyacide, c'est-à-dire qu'elle contient l'hétéropolyacide à une faible concentration, en particulier à une concentration inférieure à $10^{-3}$ mole/l, et notamment inférieure à $10^{-4}$ mole/l.

Généralement, la concentration de l'hétéropolyacide est comprise entre des concentrations de l'ordre de $10^{-8}$ M et des concentrations de l'ordre de $10^{-3}$ M.

Pour obtenir l'effet d'activation de l'électrode, on applique à l'électrode en contact avec la solution de traitement une tension cathodique suffisante pour obtenir à ladite électrode une forme réduite de l'hétéropolyacide. Pour cela, on applique à l'électrode ledit potentiel cathodique et on réduit l'hétéropolyacide de départ par électrolyse.

Toutefois, ce traitement à un potentiel cathodique peut n'être effectué qu'ultérieurement, lors d'une première utilisation de l'électrode traitée à l'hétéropolyacide, dans un bain d'électrolyse (solution aqueuse d'acide).

Généralement, on soumet l'électrode à traiter à un potentiel pouvant aller de -0,4 à -1,3 volt par rapport à l'électrode saturée au calomel.

On observe que le courant augmente avec le temps et finit par se stabiliser, à une valeur élevée (cette stabilisation correspond à la vitesse maximale de dégagement de l'hydrogène au potentiel de l'électrode). L'électrode peut alors être considérée comme traitée. La période de traitement est d'autant plus courte que le potentiel de traitement est plus négatif. Le temps de traitement varie généralement de 3 à 60 minutes environ.

Sur l'électrode non traitée, l'étude du comportement électrochimique des hétéropolyanions par voltamétrie cyclique, montre, avant la vague de réduction des protons, plusieurs vagues de réduction réversibles à la vitesse de balayage de 100 mV/s. Selon le degré d'avancement du traitement de l'électrode, le potentiel de réduction des protons se déplace de plus en plus dans le sens positif, ce qui empêche progressivement l'observation éventuelle des vagues de réduction de l'hétéropolyanion. Cela caractérise l'effet catalytique des faibles quantités d'hétéropolyacide réduit présent à la surface de l'électrode traitée.

Les électrodes ainsi traitées conservent leurs propriétés sans précautions de protection particulières. Ainsi une électrode traitée et stockée à l'air ou dans de l'eau pendant plus de trois mois, puis plongée à nouveau dans la solution d'hétéropolyacide, présente, sans période d'induction, l'activité observée en fin de traitement.

EP 0 188 929 B1

De même, on constate que l'électrode ainsi stockée, puis plongée dans une solution sans hétéropolyacide, a conservé son activité dans la réaction de dégagement de l'hydrogène par électrolyse.

Bien entendu, le traitement des électrodes peut aussi être effectué *in situ*, au début d'une opération d'électrolyse de l'eau en milieu acide, en ajoutant simplement l'hétéropolyacide au bain d'électrolyse.

L'invention a également pour objet un procédé d'électrolyse dans lequel on utilise comme électrode une électrode activée à l'aide d'un hétéropolyacide, telle que définie précédemment.

L'invention concerne notamment l'utilisation d'une telle électrode comme cathode d'électrolyse dans un électrolyte solide ou liquide, et en particulier dans une opération d'électrolyse de l'eau en milieu acide.

Il est évident pour les spécialistes que la méthode d'activation d'électrodes selon l'invention présente de nombreux avantages.

Le traitement utilise des produits non volatils et non toxiques qui ne présentent donc pas de dangers de pollution.

Le procédé de préparation des électrodes est particulièrement facile à mettre en oeuvre.

Les hétéropolyacides présentent une très grande stabilité dans un domaine de températures allant depuis des températures de l'ordre de -70°C jusqu'à des températures supérieures à + 250°C.

La durée de stockage à l'air ou à l'eau des électrodes traitées est pratiquement infinie.

Un point très important est que ces électrodes, contrairement aux électrodes à base de métaux précieux, sont insensibles aux polluants habituels qui agissent comme poisons du catalyseur. Il faut noter à ce propos que le traitement peut donc être effectué avec des hétéropolyacides de degré de pureté commerciale, sans que cela nuise à l'efficacité des électrodes traitées. Il s'agit là d'un avantage extrêmement important car on sait que l'activité des électrodes à base de métaux précieux est rapidement amoindrie par les impuretés qui agissent comme poison entravant l'activité catalytique.

Un autre avantage des électrodes traitées selon l'invention est leur grande stabilité en fonctionnement, même sous de fortes densités de courant.

On notera enfin que l'avantage économique apporté par le procédé de l'invention est très important, compte tenu du coût modique des matériaux tels que le carbone, dont l'utilisation industrielle comme cathode à hydrogène était jusqu'à présent impossible en raison de la trop forte surtension de dégagement d'hydrogène observée pour ces matériaux.

Une expérience type de durée de fonctionnement a été faite avec des électrodes de carbone vitreux activées selon le procédé de l'invention.

Les densités de courant dans les électrolyseurs industriels vont de 0,1 A.cm$^{-2}$ à 1 A.cm$^{-2}$. Les tests de durée ont donc été faits avec une densité de courant de 1 A.cm$^{-2}$. Les résultats sont indiqués dans l'exemple 1 ci-après.

La comparaison avec l'électrode de platine est la plus significative. Les densités de courant obtenues sur platine ne peuvent se maintenir dans le temps sans surtension supplémentaire qu'à condition que les solutions électrolysées soient très pures. En effet, des concentrations de l'ordre de 10$^{-5}$ M de certains ions comme Pb$^{2+}$ et Hg$^{2+}$ suffisent à empoisonner les catalyseurs au platine ou au palladium; voir par exemple A. HELLER, E. AHARON-SHALOM, W.A. BONNER et B. MILLER, J. Am. Chem. Soc. 104 (1982) 6942, et J.A. BRUCE, T. MURAHASHI et M.S. WRIGHTON, J. Phys. Chem. 86 (1982) 1552.

Au contraire, aucune précaution particulière n'est prise dans le cas de la présente étude et même le mercure déposé sous forme d'électrode stationnaire sur l'or a pu être activé.

Comme preuve supplémentaire de la résistance du catalyseur aux polluants, divers acides d'origines diverses (HCl, HClO$_4$, H$_2$SO$_4$) ont été utilisés sans purification préalable, et cela sans aucun inconvénient.

Cette insensibilité aux ions polluants de l'électrode traitée selon l'invention est particulièrement intéressante pour l'utilisation dans les électrolyseurs à électrolyte polymère solide.

Les électrodes de carbone vitreux et de graphite traitées selon l'invention ont fonctionné sous une densité de courant de 1 A.cm$^{-2}$ pendant plus de 1 000 heures sans aucun signe de défaillance. Les volumes d'hydrogène par heure et par unité de surface d'électrode correspondent pratiquement, dans le cas du carbone vitreux, à un rendement de 100 % en courant.

D'autres avantages ressortiront des études d'activité et de durée rapportées dans la partie expérimentale ci-après.

Les exemples suivants illustrent l'invention sans toutefois la limiter.

**Exemple 1**

L'électrode soumise au traitement est en carbone vitreux (origine: Carbone-Lorraine). On plonge cette électrode dans une solution aqueuse d'acide sulfurique de pH = 0 contenant 4,8.10$^{-5}$ M de SiW$_{12}$O$_{40}$H$_4$.

Cette électrode de carbone vitreux est potentiostatisée à -1,2 V, par rapport à l'électrode au calomel saturée.

La contre électrode en platine est dans un compartiment qui est séparé du compartiment contenant l'électrode de travail et la référence par un fritté de porosité 4.

L'électrolyte est le même dans les deux compartiments.

La densité de courant monte progressivement puis se stabilise au bout de 3 minutes environ.

La courbe intensité-potentiel obtenue à la suite de ce traitement correspond à la réaction de dégagement

5

d'hydrogène. L'analyse de cette courbe permet la détermination de la densité de courant d'échange pour cette réaction. Typiquement, on obtient log $i_0$ = -2 ($i_0$ en A.cm$^{-2}$).

Avant traitement, on obtenait sur la même électrode en l'absence de $SiW_{12}O_{40}H_4$ une densité de courant d'échange beaucoup plus faible (log $i_0$ = -7,2) pour a réaction de dégagement d'hydrogène. A cette variation de courant d'échange correspond un gain en potentiel de l'ordre de 1 Volt. (voir tableau II ci-après).

La même électrode a été utilisée pour un test de durée. Dans ce dernier cas, l'électrolyte est une solution aqueuse d'acide sulfurique 3N et la densité de courant, mesurée à - 0,5V par rapport à l'électrode au calomel saturée, est de 1 A.cm$^{-2}$. L'hydrogène à été identifié par chromatographie et la mesure de sa quantité (416 ml.h$^{-1}$.cm$^{-2}$) correspond à un rendement de 100 % en courant. La durée du test est supérieure à 1500 heures. On ne constate aucune tendance à l'empoisonnement de l'électrode activée.

Le même test de durée, dans l'acide sulfurique 3N, a été réalisé avec une électrode de graphite modifiée. Le courant a été maintenu intensiostatiquement à 1 Ampère pendant plus de 1 500 heures. Aucune tendance à l'augmentation de la surtension n'a été observée.

L'analyse E.S.C.A. d'une électrode de carbone vitreux avant et après traitement montre pour la surface modifiée la présence des éléments Si et W.

On a traité de façon analogue des électrodes de graphite, de platine, d'or, de tungstène et de mercure.

L'effet catalytique n'est pas observé lorsque la solution de traitement a une concentration en hétéropolyacide trop élevée, supérieure par exemple à $10^{-3}$ M. En outre, l'effet catalytique n'est plus appréciable pour les très faibles concentrations de l'ordre de $10^{-8}$ M.

On a obtenu des résultats comparables en remplaçant l'acide $SiW_{12}O_{40}H_4$ Par un des acides suivants: $PW_{12}O_{40}H_3$; $P_2W_{18}O_{62}H_6$; et $P_2W_{17}MoO_{62}H_6$.

**Exemple 2**

Caractérisation des électrodes traitées selon l'invention.

La caractérisation quantitative des matériaux, avant et après traitement, a été faite par détermination des densités de courants d'échange, $i_0$, comparées à celle du platine. Les résultats sont rassemblés dans le tableau I ci-après sous forme de (- log $i_0$). Les résultats après traitement soutiennent avantageusement la comparaison avec les meilleures cathodes à hydrogène de la littérature. En effet, les courants d'échange les plus importants observés sur métaux nus sont dans l'ordre suivant (entre parenthèses sont données les valeurs extrêmes de - log $i_0$):

Pd (3,3 à 2,8) > Pt (3,5 à 2,9) > Re (3) > Rh (3,6 à 3,2) > Ru (4,2)

Référence: S. TRASATTI, J. Electroanal. Chem. 39 (1972) 163.

Il apparaît, à la lecture du tableau I, que dans tous les cas, et quelle que soit la nature du matériau utilisé, une amélioration considérable et spectaculaire est obtenue. Il faut remarquer plus particulièrement le cas du carbone vitreux (CV) traité, qui devient environ dix fois plus performant que le platine. De plus, ce matériau est peu coûteux. Les résultats concernant le graphite ne figurent pas dans le tableau I, car sa surface réelle est trop mal connue. Cependant, les observations sont tout à fait identiques à celles obtenues avec les autres matériaux. Ce dernier exemple est très important à cause du coût très faible du graphite, et de sa grande surface, qui l'ont déjà fait adopter, en association avec des catalyseurs au platine, dans certains électrolyseurs en milieu acide.

D'un point de vue pratique, il est encore plus frappant de décrire les améliorations apportées aux divers matériaux au cours de leur fonctionnement réel. Le tableau II ci-après rassemble les valeurs de potentiel, mesurées par rapport à l'électrode au calomel saturée (ECS) pour une densité de courant fixée, avant et après traitement des matériaux selon la méthode décrite à l'exemple 1. Dans tous les cas, on observe un gain considérable en potentiel et les résultats décrits à l'exemple 1 attestent de la stabilité des performances en cours de fonctionnement.

**Tableau I**

Densités de courant d'échange pour la réaction de dégagement d'hydrogène sur divers matériaux avant et après modification selon le procédé de l'invention.

| Matériau | – log $i_0$ (avec $i_0$ en A. cm$^{-2}$) |
|---|---|
| Pt | 3 à 3,3 |
| Pt modifié | 2,5 à 2,8 |
| Au | 5,7 |
| Au modifié | 2,5 |
| W | 6,8 |

**Tableau I - cont.**

| Matériau | $- \log i_o$ (avec $i_o$ en A. cm$^{-2}$) |
|---|---|
| W modifié | 2,6 |
| CV (carbone vitreux) | 7,2 à 8,5 |
| CV modifié | 2 à 2,3 |
| Hg | 11 à 12,7 |
| Hg modifié | 3,9 à 4,1 |

**Tableau II**

Améliorations en potentiel $\Delta E_i$ mesurées pour la réaction de dégagement d'hydrogène. $E_i$ désigne le potentiel mesuré lorsque la densité de courant est i = 1,5 mA.cm$^{-2}$, avant et après modification de l'électrode. Les valeurs de $E_i$ sont tirées des voltammogrammes obtenus à une vitesse de balayage de 100 mV/s en milieu 1N $H_2SO_4$.

| Matériau | $-E_i$ (Volt/E.C.S.) | $\Delta E_i$ (Volt) |
|---|---|---|
| Pt | 0,30 | |
| | | 0,03 |
| Pt* modifié | 0,27 | |
| Au | 0,60 | |
| | | 0,38 |
| Au* modifié | 0,22 | |
| W | 0,56 | |
| | | 0,35 |
| W* modifié | 0,21 | |
| CV (carbone vitreux) | 1,25 | |
| | | 1,08 |
| CV* modifié | 0,17 | |
| Hg | 1,30 | |
| | | 0,90 |
| Hg modifié | 0,40 | |

* Les électrodes ont été traitées, comme décrit à l'exemple 1, dans une solution

($H_2SO_4$, pH = 0) à $4,8.10^{-5}$ M de $SiW_{12}O_{40}H_4$.

Pour les électrodes en graphite, dont la surface réelle est grande mais mal connue, les améliorations apportées par l'activation selon la présente invention peuvent être mises en évidence de la façon suivante.

Dans une solution aqueuse à 0,5 mole/l de $H_2SO_4$, une électrode de graphite non modifiée (non traitée) a donné un courant maximum de 58 milliampères à - 1,2 Volt par rapport à l'électrode au calomel.

A ce même potentiel, dans le même électrolyte, et en présence d'une concentration de $4,8.10^{-5}$ moles/l de $SiW_{12}O_{40}H_4$, le courant augmente et se stabilise aux environs de 550 milliampères.

Entre l'électrode en graphite non modifiée et l'électrode modifiée, le gain en potentiel, pour un courant observé égal à 1 milliampère, est toujours supérieur à 1 volt.

**Revendications**

1. Electrode constituée en matériau conducteur de l'électricité, activée par traitement avec un hétéropolyacide, caractérisée par le fait qu'elle peut être obtenue par un procédé consistant à mettre en contact une électrode en matériau conducteur avec une solution aqueuse diluée d'au moins un hétéropolyacide ayant une concentration inférieure à $10^{-3}$M, en milieu acide, puis à appliquer à l'électrode une tension cathodique d'au moins -0,4 volt, par rapport à une électrode au calomel saturée, pendant un temps suffisant pour que le courant soit stabilisé, ce qui correspond au fait que les vagues de réduction de l'hétéropolyanion correspondant ne sont plus observables en voltamétrie cyclique.

2. Electrode activée selon la revendication 1, caractérisée par le fait que ledit matériau conducteur est un métal, le carbone vitreux ou le graphite.

3. Electrode activée selon la revendication 1, caractérisée par le fait:

– que dans le cas où elle se présente sous la forme d'un solide ayant une surface mesurable, elle permet d'obtenir une densité de courant d'échange $i_o$, exprimée en ampères/cm$^2$, pour la réaction de dégagement d'hydrogène par électrolyse de l'eau en milieu acide, telle que (- log $i_o$) est inférieur à 3, et en particulier à 2,8; que dans le cas où ladite électrode est en mercure, ladite densité de courant est telle que (- log $i_o$) est inférieur ou égal à 4,1;

– et que dans le cas où elle se présente sous la forme d'un solide dont la surface n'est pas mesurable, le gain en potentiel mesuré, pour l'électrode activée, dans la réaction de dégagement d'hydrogène par électrolyse de l'eau en milieu acide, pour un courant observé égal à 1 milliampère, est au moins égal à 1 volt.

4. Procédé de préparation d'une électrode activée telle que définie dans l'une quelconque des revendications précédentes, caractérisé par le fait que l'on met en contact une électrode constituée par un matériau conducteur d'électricité avec une solution aqueuse diluée d'au moins un hétéropolyacide ayant une concentration inférieure à 10$^{-3}$ M, en milieu acide, et que l'on applique à ladite électrode une tension cathodique d'au moins -0,4 volt, par rapport à une électrode au calomel saturée, pendant un temps suffisant pour que le courant soit stabilisé, ce qui correspond au fait que les vagues de réduction de l'hétéropolyanion correspondant ne sont plus observables en voltamétrie cyclique.

5. Procédé selon la revendication 4, caractérisé par le fait que l'on opère à pH inférieur à 3.

6. Procédé selon l'une quelconque des revendications 4 et 5, caractérisé par le fait que la concentration en hétéropolyacide de la solution de traitement est comprise entre des concentrations de l'ordre de 10$^{-8}$ M et des concentrations de l'ordre de 10$^{-3}$ M.

7. Procédé selon l'une quelconque des revendications 4 à 6, caractérisé par le fait que l'on soumet l'électrode à traiter à un potentiel pouvant aller de -0,4 à -1,3 volt par rapport à l'électrode au calomel saturée.

8. Procédé selon l'une quelconque des revendications 4 à 7, caractérisé par le fait que l'on applique ledit potentiel cathodique pendant 3 à 60 minutes.

9. Procédé selon l'une quelconque des revendications 4 à 8, caractérisé par le fait que l'hétéropolyacide est choisi parmi les hétéropolyacides dérivés du molybdène et du tungstène, ainsi que parmi les dérivés analogues correspondant au remplacement partiel du molybdène ou du tungstène par le vanadium.

10. Procédé selon l'une quelconque des revendications 4 à 9, caractérisé par le fait que l'hétéropolyacide est choisi parmi les acides silico-12-tungstique, phospho-12-tungstique, 2-phospho-18-tungstique, phospho-12-molybdique, 2-phospho-18-molybdique, silico-12-molybdique, boro-12-tungstique, germano-12-tungstique, 2-arsénio-18-tungstique, phospho-12-molybdique, 2-phospho-5-molybdique et germano-12-molybdique, ainsi que les analogues germanovanadomolybdiques, germanovanadotungstiques, phosphovanadomolybdiques, phosphomolybdotungstiques, phosphovanadotungstiques, silicovanadomolybdiques et silicovanadotungstiques correspondants.

11. Electrode activée selon l'une quelconque des revendications 1 à 3, caractérisée par le fait que ledit procédé est tel que défini dans l'une quelconque des revendications 5 à 10.

12. Application d'une électrode activée telle que définie dans l'une quelconque des revendications 1, 2, 3 et 11, caractérisée par le fait que l'on utilise une telle électrode activée dans un procédé d'électrolyse, notamment comme cathode dans un électrolyte solide ou liquide.

13. Application selon la revendication 12, caractérisée par le fait que l'on utilise ladite électrode activée comme cathode dans une opération d'électrolyse de l'eau en milieu acide.

**Patentansprüche**

1. Elektrode, bestehend aus einem elektrisch leitfähigen Material, das durch Behandlung mit einer Heteropolysäure aktiviert worden ist, dadurch gekennzeichnet, daß sie nach einem Verfahren erhalten worden ist, das darin besteht, daß man eine Elektrode aus einem leitfähigen Material mit einer wäßrigen verdünnten Lösung von mindestens einer Heteropolysäure in einer Konzentration unter 10$^{-3}$ m in saurem Milieu in Kontakt bringt, daß man danach auf die Elektrode eine Kathodenspannung von mindestens -0,4 V bezüglich einer gesättigten Kalomelelektrode über eine Zeitdauer aufbringt, die ausreicht, daß der Strom sich stabilisiert, welcher erfahrungsgemäß den Reduktionswellen des entsprechenden Heteropolyanions entspricht, die nicht mehr bei cyclischer Spannungsmessung beobachtet werden können.

2. Aktivierte Elektrode nach Anspruch 1, dadurch gekennzeichnet, daß das leitfähige Material ein Metall, ein kohlenstoffhaltiges Glas oder Graphit ist.

3. Aktivierte Elektrode nach Anspruch 1, dadurch gekennzeichnet, daß sie in dem Fall, daß sie aus einem Feststoff mit einer meßbaren Oberfläche gebildet ist, eine Austausch-Stromdichte $i_o$ zu erhalten gestattet, ausgedrückt in A/cm$^2$, für

EP 0 188 929 B1

die Reaktion des Freisetzens von Wasserstoff durch Elektrolyse in Wasser im sauren Milieu wie (- log $i_0$) unter 3, insbesondere 2,8; daß in dem Fall, daß die Elektrode aus Quecksilber besteht, diese Stromdichte wie (- log $i_0$) unterhalb oder gleich 4,1 beträgt, und daß in dem Fall, daß sie in der Form eines Feststoffs vorliegt, dessen Oberfläche nicht meßbar ist, der gemessene Potentialgewinn für die aktivierte Elektrode während der Reaktion der Freisetzung von Wasserstoff durch Elektrolyse im sauren Milieu für eine beobachtete Stromstärke gleich 1 mA, mindestens gleich 1 V ist.

4. Verfahren zur Herstellung einer aktivierten Elektrode, wie sie in den vorhergehenden Ansprüchen definiert ist, dadurch gekennzeichnet, daß man eine Elektrode, die aus einem elektrisch leitfähigen Material besteht mit einer wäßrigen, verdünnten Lösung von mindestens einer Heteropolysäure mit einer Konzentration unter $10^{-3}$ m in einem sauren Milieu in Kontakt bringt und daß man auf diese Elektrode eine Kathodenspannung von mindestens -0,4 V gegenüber einer gesättigten Kalomelelektrode aufbringt über eine Zeit, die ausreicht, daß sich der Strom stabilisiert, der erfahrungsgemäß den Reduktionswellen eines entsprechenden Heteropolyanoins entspricht, die nicht mehr bei der cyclischen Spannungsmessung zu beobachten sind.

5. Verfahren nach Anspruch 4, dadurch gekennzeichnet, daß man bei einem pH unter 3 arbeitet.

6. Verfahren nach einem der Ansprüche 4 und 5, dadurch gekennzeichnet, daß die Konzentration der Heteropolysaure in der Behandlungslösung zwischen Konzentrationen in der Größenordnung von $10^{-8}$ m und Konzentrationen in der Größenordnung von $10^{-3}$ m liegt.

7. Verfahren nach den Ansprüchen 4 bis 6, dadurch gekennzeichnet, daß man die Elektrode einer Behandlung mit einem Spannungsunterschied unterwirft, der zwischen -0,4 bis -1,3 V bezüglich der gesättigten Kalomelelektrode liegt.

8. Verfahren nach den Ansprüchen 4 bis 7, dadurch gekennzeichnet, daß die Kathodenspannung für 3 bis 60 Minuten an legt.

9. Verfahren nach den Ansprüchen 4 bis 8, dadurch gekennzeichnet, daß die Heteropolysäure ausgewählt ist aus Heteropolysäuren, abgeleitet von Molybdän oder Wolfram oder solchen entsprechenden analogen Derivaten, wobei teilweise das Molybdän oder Wolfram durch Vanadium ersetzt ist.

10. Verfahren nach den Ansprüchen 4 bis 9, dadurch gekennzeichnet, daß die Heteropolysäure ausgewählt ist aus den Säuren Silico-12-wolframsäure, Phospho-12-wolframsäure, 2-Phospho-18-wolframsäure, Phospho-12-molybdänsäure, 2-Phospho-18-molybdänsäure, Silico-12-molybdänsäure, Bor-12-wolframsäure, Germano-12-wolframsäure, 2-Arseno-18-wolframsäure, Phospho-12-molybdänsäure, 2-Phospho-5-molybdänsäure und Germano-12-molybdänsäure sowie den analogen Germanovanadomolybdänsäuren, Germanovanadowolframsäuren, Phosphovanadomolybdänsäuren, Phosphomolybdänwolframsäuren, Phosphovanadowolframsäuren, Silicovanadomolybdänsäuren und Silicovanadowolframsäuren.

11. Aktivierte Elektrode nach den Ansprüchen 1 bis 3, dadurch gekennzeichnet, daß das Verfahren ein solches ist wie es in den Ansprüchen 5 bis 10 definiert ist.

12. Verwendung einer aktivierten Elektrode, wie sie in den Ansprüchen 1, 2, 3 und 11 definiert ist, dadurch gekennzeichnet, daß man eine derartige aktivierte Elektrode in einem Elektrolysenverfahren verwendet, insbesondere als Kathode in einem festen oder flüssigen Elektrolyten.

13. Anwendung nach Anspruch 12, dadurch gekennzeichnet, daß man die aktivierte Elektrode als Kathode in einer Elektrolyseoperation im Wasser in sauren Milieu verwendet.

## Claims

1. Electrode consisting of electrically conductive material, activated by treatment with a heteropolyacid, characterized in that it can be obtained by a process consisting in placing an electrode made of conductive material in contact with a dilute aqueous solution of at least one heteropolyacid which has a concentration below $10^{-3}$ M in acidic medium, and in then applying to the electrode a cathode voltage of at least -0.4 volts, relative to a saturated calomel electrode, for a sufficient time for the current to be stabilized, which corresponds to the fact that the reduction waves of the corresponding heteropolyanion can no longer be observed in cyclic voltammetry.

2. Activated electrode according to Claim 1, characterized in that the said conductive material is a metal, vitreous carbon or graphite.

3. Activated electrode according to Claim 1, characterized by the fact:

   – that, in the case where it is in the form of a solid having a measurable surface, it makes it possible to obtain an

9

exchange current density $i_o$, expressed in amperes/cm$^2$, for the reaction of hydrogen evolution by hydrolysis of water in acidic medium, such that ($-\log i_o$) is less than 3 and in particular than 2.8;

— that in the case where the said electrode is made of mercury, the said current density is such that ($-\log i_o$) is less than or equal to 4.1;

— and that, in the case where it is in the form of a solid whose surface is not measurable, the gain in potential measured, for the activated electrode, in the reaction of hydrogen evolution by electrolysis of water in acidic medium is at least equal to 1 volt for an observed current equal to 1 milliampere.

4. Process for the preparation of an activated electrode such as defined in any one of the preceding claims, characterized in that an electrode consisting of an electrically conductive material is placed in contact with a dilute aqueous solution of at least one heteropolyacid which has a concentration below 10$^{-3}$ M, in acidic medium, and that a cathode voltage of at least 0.4 volts, relative to a saturated calomel electrode, is applied to the said electrode for a sufficient time for the current to be stabilized, which corresponds to the fact that the reduction waves of the corresponding heteropolyanion can no longer be observed in cyclic voltammetry.

5. Process according to Claim 4, characterized in that the operation is carried out at a pH of less than 3.

6. Process according to either of Claims 4 and 5, characterized in that the heteropolyacid concentration of the treatment solution is between concentrations of the order of 10$^{-8}$ M and concentrations of the order of 10$^{-3}$ M.

7. Process according to any one of Claims 4 to 6, characterized in that the electrode to be treated is subjected to a potential which can range from -0.4 to -1.3 volts relative to the saturated calomel electrode.

8. Process according to any one of Claims 4 to 7, characterized in that the said cathode potential is applied for 3 to 60 minutes.

9. Process according to any one of Claims 4 to 8, characterized in that the heteropolyacid is chosen from heteropolyacids derived from molybdenum and from tungsten, and from the analogous derivatives corresponding to partial replacement of molybdenum or tungsten by vanadium.

10. Process according to any one of Claims 4 to 9, characterized in that the heteropolyacid is chosen from silico-12-tungstic, phospho-12-tungstic, 2-phospho-18-tungstic, phospho-12-molybdic, 2-phospho-18-molybdic, silico-12-molybdic, boro-12-tungstic, germano-12-tungstic, 2-arsenio-18-tungstic, phospho-12-molybdic, 2-phospho-5-molybdic and germano-12-molybdic acids and the corresponding germanovanadomolybdic, germanovanadotungstic, phosphovanadomolybdic, phosphomolybdotungstic, phosphovanadotungstic, silicovanadomolybdic and silicovanadotungstic analogues.

11. Activated electrode according to any one of Claims 1 to 3, characterized in that the said process is such as defined in any one of claims 5 to 10.

12. Application of an activated electrode such as defined in any one of claims 1, 2, 3 and 11, characterized in that an activated electrode of this kind is employed in an electrolysis process, especially as cathode in a solid or liquid electrolyte.

13. Application according to Claim 12, characterized in that the said activated electrode is employed as cathode in an operation of electrolysis of water in acidic medium.